Europäisches Patentamt

European Patent Office

Office européen des brevets

(11) Publication number: **0 016 738**
**B1**

## (12) EUROPEAN PATENT SPECIFICATION

(45) Date of publication of patent specification: **17.10.84**

(21) Application number: **80850017.7**

(22) Date of filing: **13.02.80**

(51) Int. Cl.³: **F 16 B 41/00, E 05 B 73/00, B 60 R 9/04**

(54) **Fastening or clamping device.**

(30) Priority: **19.02.79 SE 7901430**
**08.01.80 SE 8000115**

(43) Date of publication of application:
**01.10.80 Bulletin 80/20**

(45) Publication of the grant of the patent:
**17.10.84 Bulletin 84/42**

(84) Designated Contracting States:
**AT BE CH DE IT NL**

(56) References cited:
**FR-A- 625 985**
**FR-A-1 005 967**
**GB-A-1 452 893**
**US-A-1 516 453**
**US-A-1 604 690**

(73) Proprietor: **Industri AB Thule**
**Box 67**
**S-330 33 Hillerstorp (SE)**

(72) Inventor: **Thulin, Willis**
**Vallgatan 18**
**S-33033 Hillerstorp (SE)**

(74) Representative: **Linde, Leif et al**
**Vernamo Patentbyrä AB P.O. Box 1**
**S-270 11 Abbekas (SE)**

Courier Press, Leamington Spa, England.

## Description

The present invention relates to a fastening or clamping device of the kind comprising a rotatable fastening or clamping element, for example a screw or a nut, and an operating knob connected with the fastening or clamping element.

Devices of the kind defined above are often used in luggage carriers, such as roof racks, ski holders or the like, in order to connect the carriers to the edges of a car roof. Fastening or clamping devices of said kind are also used for retaining objects, for example surf boards, to luggage carriers for vehicles. Thereby, it is previously known to use different kinds of locking devices for preventing that the luggage carriers and/or the objects supported thereby are stolen. However, it brings about substantial additional costs to use conventional locking devices and therefore it is desirable to provide a fastening or clamping device which per se comprises a locking device, which prevents undue releasing of the fastening or clamping device and thereby prevents that the object fastened by means of the fastening or clamping device is stolen.

US—A—1604690 discloses a fastening or clamping device of this kind that comprises a locking device, which is adapted to take two different positions, a first position, in which the locking device unrotatably fixes the operating knob in relation to the fastening or clamping element in order to allow that said element is rotated by means of the operating knob, and a second position, in which the locking device allows that the operating knob is unobstructedly rotated in relation to the fastening or clamping element in order to prevent rotation thereof by means of the operating knob.

Thereby, the fastening or clamping device can comprise a locking device, which has a lock element which by means of a key in a conventional way is movable between the two positions. An advantageous fastening or clamping device according to the invention is distinguished by the features according to the following claims.

The fastening or clamping device can comprise a fastening or clamping element in the form of a screw or a nut. If the fastening or clamping element is constituted by a nut the fastening or clamping device has a central through opening for a screw or the like, on which the nut is positioned.

The invention is described in the following with reference to the accompanying drawings.

Fig. 1 shows a support leg for a ski holder or a roof rack for cars, the support leg being provided with an embodiment of a fastening or clamping device according to the invention.

Fig. 2 is an axial section of the fastening or clamping device of Fig. 1 on line II—II in Fig. 4.

Fig. 3 is an axial section of the fastening or clamping device on line III—III in Fig. 4.

Fig. 4 is a plan view of the fastening or clamping device according to Figs. 1—3.

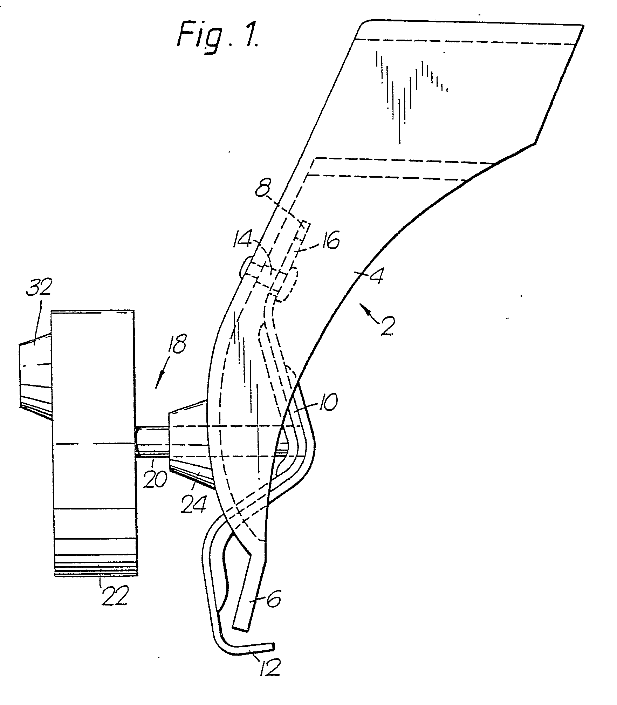

In Fig. 1 there is shown a support leg 2 for a ski holder intended to be secured to the roof of a car and comprising a clamping device according to the invention. The support leg 2 comprises a first portion 4 having a lower part 6 adapted to be received in the gutter of the car roof. The support leg 2 also comprises a clamping portion 10 which is at its upper end 8 movably connected with the portion 4 and has a lower annular part 12 adapted to engage below the gutter of the car roof when the support leg is secured thereto. The clamping portion 10 is connected with the portion 4 by means of a pin 14 supported by the portion 4 and received in a slot 16 in the clamping portion 10.

The support leg 2 is securable to the gutter of the car roof by operating the clamping portion 10 by means of a clamping device 18 comprising a clamping element in the form of a screw 20 and an operating knob 22 connected therewith. The screw 20 extends through a threaded opening in a boss 24 on the portion 4 and has its end engaging the central portion of the clamping portion 10. When the screw 20 is screwed into its threaded opening the end of the screw is pressed against the clamping portion 10 so that the support leg 2 is secured to the roof gutter.

In order to prevent undue releasing of the screw 20 which in turn could allow that the ski holder was stolen the fastening or clamping device 18 is in accordance with the invention designed in a special way.

The screw 20 supports a cup-shaped portion 24, which at its central part is fixedly connected with a head 26 of a screw 20. The cup-shaped portion 24 has an annular portion 28 which is formed with a number of depressions 29. The depressions 29 are intended to constitute engagement surfaces for a purpose which is described in the following. The cup-shaped portion 24 with its annular portion 28 is enclosed by the operating knob 22 which also is substantially cup-shaped. At its free edge portion the cup-shaped operating knob 22 has a number of inwardly bent locking lugs 30 preventing the cup-shaped knob from being detached from the cup-shaped portion 24 but providing such a loose connecting between the operating knob 22 and the cup-shaped portion 24 with the annular portion 28 that the operating knob 22 is unobstructedly rotatable in relation to the cup-shaped portion 24 and thereby also in relation to the screw 20. The operating knob 22 supports a locking device 32 which comprises a locking element 34 which in a conventional way is switchable between two different positions by means of a key. In the position of the locking device 32 as shown in Figs. 2—4 the locking element 34 engages one of the depressions 29 of the operating knob 22. In this position the operating knob 22 is through the locking device 32 and the annular portion 28 of the cup-shaped portion 24 connected with the screw 20 in such a way, that a rotation of the operating knob 22 provides for a rotation of the screw 20.

In order to prevent undue operation of the screw 20 in order to loosen the ski holder from the car roof the locking element 34 of the locking device 32 is by means of the key switched from the position of engagement in the depression 29. In this position the operating knob 22 is unobstructedly rotatable in relation to the annular portion 28 for which reason it is not possible to operate the screw 20 by means of the operating knob 22. Thus, it is in this position not possible to steal a ski holder or the like which is secured to a car roof by means of a support leg of the kind shown in Fig. 1.

The invention can be modified within the scope of the following claims. For example the fastening or clamping device according to the invention can comprise a nut as the fastening or clamping element instead of the screw shown in the above described embodiments. A fastening or clamping device of this kind can advantageously be used for locking an object to a luggage or load carrier for vehicles. For example the object can be a surf board. In the case that the fastening or clamping element is constituted by a nut the fastening or clamping device is formed with a through opening for the threaded pin or screw on which the nut is positioned.

## Claims

1. A fastening or clamping device comprising a rotatable fastening or clamping element (20), for example a screw or a nut, a substantially annular element (28) which is fixedly and substantially concentrically connected with the fastening or clamping element, an operating knob (22) which encloses the annular element in a substantially concentric relationship therewith, and a locking device (32) which is supported by and fixedly connected with the operating knob and which comprises a lock element (34) which is movable between two different positions, a first position in which the lock element is in firm engagement with said annular element for unrotatably fixing the locking device and thereby the operating knob in relation to the annular element and thereby in relation to the fastening or clamping element for allowing that the fastening or clamping device is rotated by means of the operating knob, and a second position in which the lock element is out of engagement with the annular element allowing the operating knob to be unobstructedly rotated in relation to the annular element and thereby in relation to the fastening or clamping element for preventing rotation thereof by means of the operating knob, characterized in that the annular element (28) which is firmly engaged by the lock element (34) of the locking device (32) in said first position thereof is constituted by a peripheral portion (28) of a cup-shaped element (24) which is at its central portion connected with the fastening or clamping element (20) and that said cup-shaped element (24) defines an annular space positioned radially inside said peripheral portion (28), the locking device (32) being supported by and connected with the operating knob (22) in such a way that substantially the whole locking device (32) is received in said annular space in a position excentrically displaced from the axis of the fastening or clamping element (20).

2. A fastening or clamping device as claimed in claim 1, characterized in that the operating knob (22) is constituted by a cup-shaped cover, which closes the annular space defined by the cup-shaped element (24) and is rotatably connected therewith by means of locking lugs (30) provided at the edge of the cover.

## Revendications

1. Dispositif de fixation ou de serrage comprenant un élément (20) de fixation ou de serrage pouvant tourner, par exemple une vis ou un écrou, un élément (28) sensiblement annulaire qui est relié de façon fixe et sensiblement concentrique avec l'élément de fixation ou de serrage, ou bouton (22) de commande qui entoure l'élément annulaire en relation sensiblement concentrique, et un dispositif (32) de blocage qui est supporté par et relié de façon fixe avec le bouton de commande et qui comprend un élément (34) de blocage, lequel peut être déplacé entre deux positions différentes, un première position dans lequel l'élément de blocage s'engage fermement avec l'élément annulaire, sans que celui-ci ne puisse tourner et de même pour le bouton de commande en relation avec l'élément annulaire et, par voie de conséquence, en relation avec l'élément de fixation et de serrage afin que le dispositif de fixation ou de serrage puisse être tourné au moyen du bouton de commande, et une seconde position dans lequel l'élément de blocage est désengagé de l'élément annulaire pour permettre au bouton de commande d'être tourné librement par rapport à l'élément annulaire et de même par rapport à l'élément de fixation et de serrage afin d'empêcher sa rotation au moyen de bouton de commande, caractérisé en ce que l'élément annulaire (28), qui est fermement engagé par l'élément (34) de blocage du dispositif (32) de blocage dans cette première position, est constitué d'une partie (28) périphérique d'un élément (24) en forme de coupelle qui est, dans sa partie centrale, reliée avec l'élément (20) de fixation ou de serrage, et que l'élément (24) en forme de coupelle définit un espace annulaire positionné radialement à l'intérieur de la partie périphérique (28), le dispositif (32) de blocage étant supporté par et relié au bouton de commande (22) de telle façon que, en substance, tout le dispositif (32) de blocage se trouve dans l'espace annulaire dans une position déplacée excentriquement par rapport à l'axe de l'élément (20) de fixation ou de serrage.

2. Dispositif de fixation ou de serrage selon la revendication 1, caractérisé en ce que le bouton de commande (22) est constitué d'un couvercle en forme de coupelle, qui ferme l'espace annulaire défini par l'élément (24) en forme de coupelle et est relié à celui-ci, en pouvant tourner, au moyen de pattes (30) de blocage disposées au bord du couvercle.

## Patentansprüche

1. Befestigungs- oder Klemmvorrichtung, mit einem drehbaren Befestigungs- bzw. Klemmelement (20), beispielsweise Schraube oder Mutter, einem ringartigen Element (28), das fest und im wesentlichen konzentrisch mit dem Befestigungs- bzw. Klemmelement verbunden ist, einem Betätigungsknopf (22), der das ringartige Element praktisch konzentrisch umschliesst, und einem Feststeller (32), der am Betätigungsknopf befestigt ist und eine Verriegelung (34) aufweist, die zwischen zwei Stellungen bewegbar ist, nämlich einer ersten Stellung, bei der die Verriegelung fest am ringartigen Element anliegt und den Feststeller und damit den Betätigungsknopf gegenüber dem ringartigen Element und damit dem Befestigungs- oder Klemmelement derart drehfest arretiert, dass letzteres mittels des Betätigungsknopfes verdreht werden kann, und einer zweiten Stellung, bei der die Verriegelung ausser Eingriff mit dem ringartigen Element ist und der Betätigungsknopf bezüglich dem ringartigen Element und damit dem Befestigungs- oder Klemmelement frei drehbar ist, dessen Drehung mittels des Betätigungsknopfes dann verhindert ist, dadurch gekennzeichnet, dass das ringartige Element (28), an dem die Verriegelung (34) des Feststellers (32) in ihrer ersten Stellung fest anliegt, durch einen Umfangsbereich (28) eines schüsselförmigen Teils (24) gebildet ist, das an seinem Mittenbereich mit dem Befestigungs- oder Klemmelement (20) verbunden ist, dass das schüsselförmige Teil (24) einen Ringraum definiert, der radial innerhalb des genannten Umfangsbereiches (28) liegt, und dass die Feststeller (32) am Betätigungsknopf (22) derart angeordnet ist, dass sich praktisch der gesamte Feststeller (32) im genannten Ringraum in einer Lage befindet, die exzentrisch gegenüber der Achse des Befestigungs- oder Klemmelementes (20 versetzt ist.

2. Befestigungs- oder Klemmvorrichtung nach Anspruch 1, dadurch gekennzeichnet, dass der Betätigungsknopf (22) ein dosenförmiger Deckel ist, welcher den vom schüsselförmigen Teil (24) gebildeten Ringraum schliesst, und dass er mit dem Teil (24) mittels Verriegelungslaschen (30) am Rande des Deckels verbunden ist.

# Fig. 1.